# FASCICULE DE BREVET EUROPEEN

(11) **EP 3 686 411 B1**
(45) Date de publication et mention de la délivrance du brevet: **22.12.2021**
(21) Numéro de dépôt: 20305049.7
(22) Date de dépôt: 22.01.2020
(51) Int. Cl.: F02C 5/02, F02C 5/12, F23R 3/34, F23R 7/00

(54) **ENSEMBLE POUR TURBOMACHINE**
ANORDUNG FÜR TURBOTRIEBWERK
ASSEMBLY FOR TURBINE ENGINE

(30) Priorité: 22.01.2019 FR 1900514
(43) Date de publication de la demande: 29.07.2020
(73) Titulaire: SAFRAN AIRCRAFT ENGINES, 75015 Paris (FR)
(72) Inventeur: RODA, Jean Charles Olivier, 77550 MOISSY-CRAMAYEL (FR)
(74) Mandataire: Regimbeau

(56) Documents cités:
- WO-A1-2016/198792
- FR-A1- 2 829 528
- GB-A- 374 648
- Geo A Richards: "New Developments in Combustion Technology Part II: Step change in efficiency", , 24 juin 2014 (2014-06-24), XP055634505, Princeton Extrait de l'Internet: URL:https://cefrc.princeton.edu/sites/cefr c/files/Files/2014%20Lecture%20Notes/Richa rds/NewDevelopmentsGeoRichards-Part-2of3-P GAIN_-2014.pdf [extrait le 2019-10-22]

## Description

### DOMAINE DE L'INVENTION

La présente invention concerne un ensemble pour turbomachine.

L'invention vise plus spécifiquement un ensemble pour turbomachine comprenant une chambre de combustion isochore.

### ETAT DE LA TECHNIQUE

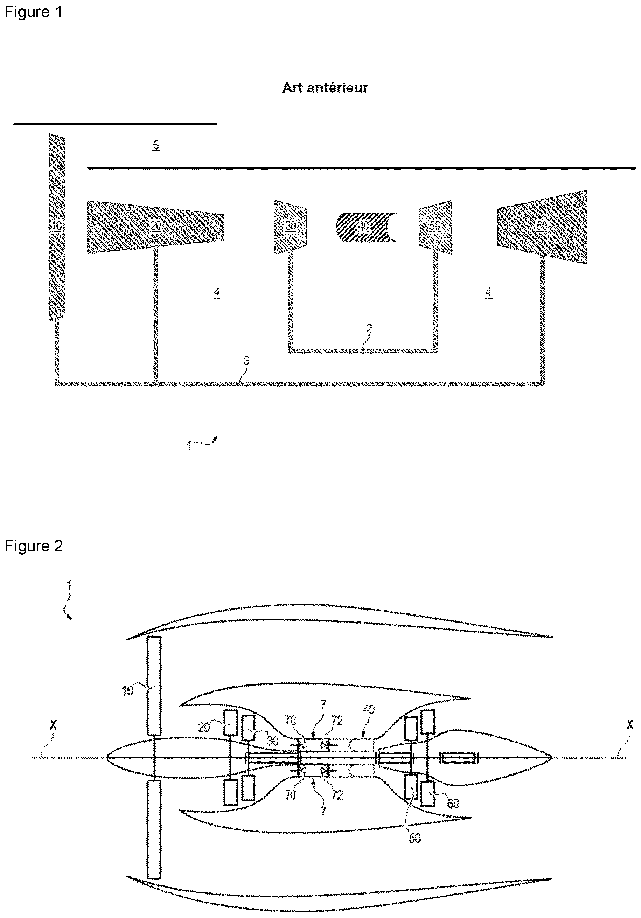

En référence à la figure 1, une turbomachine 1 connue comprend, d'amont en aval par rapport au sens d'écoulement d'air au sein de ladite turbomachine 1 en fonctionnement, une soufflante 10, un compresseur basse pression 20, un compresseur haute pression 30, une chambre de combustion isobare 40, une turbine haute pression 50 et une turbine basse pression 60. Le compresseur haute pression 30 et la turbine haute pression 50 forment un corps haute pression 2, et le compresseur basse pression 20 et la turbine basse pression 60 forment un corps basse pression 3.

En fonctionnement, l'air admis par la soufflante 10 est réparti entre un flux primaire 4, circulant à travers le corps haute pression 2 et le corps basse pression 3, et un flux secondaire 5, circulant autour du corps haute pression 2 et du corps basse pression 3. Le flux primaire 4 est comprimé à travers les compresseurs 20, 30, puis subit une combustion au sein de la chambre de combustion isobare 40, pour enfin être détendu dans les turbines 50, 60. Les turbines 50, 60 entraînent en rotation à la fois la soufflante 10 et les compresseurs 20, 30.

La plupart des améliorations récentes d'une telle turbomachine 1 se sont focalisées sur l'optimisation de son cycle thermodynamique. En abaissant le rapport de pression de la soufflante 10 et, corollairement, en augmentant le taux de dilution (i.e. le rapport entre la masse du flux secondaire 5 sur la masse d'air du flux primaire 4) et/ou le taux de compression (i.e. le rapport entre la pression totale en amont et en aval de la soufflante 10 et des compresseurs 20, 30), il a été observé des progressions du rendement propulsif et/ou du rendement thermique.

Toutefois, de telles améliorations sont en partie dégradées par des accroissements de masse et de trainée aérodynamique. Le document WO2016/198792 divulgue un autre ensemble pour turbomachine, comprenant une chambre de combustion isobare et une chambre de combustion isochore, selon l'art antérieur.

Il existe donc un besoin d'amélioration des turbomachines existantes, notamment en vue de réduire leur consommation.

### EXPOSE DE L'INVENTION

Un des buts de l'invention est d'améliorer la consommation spécifique de carburant d'une turbomachine.

Un autre but de l'invention est de réduire la masse des composants d'une turbomachine.

Il est à cet effet proposé, selon un premier aspect de l'invention, un ensemble pour turbomachine comprenant :
un compresseur,
une chambre de combustion isochore, ladite chambre de combustion isochore comprenant :
   une soupape d'admission, ladite soupape d'admission étant mobile entre :
      une position ouverte, dans laquelle la soupape d'admission autorise l'admission d'un fluide en provenance du compresseur vers la chambre de combustion isochore, et
      une position fermée, dans laquelle la soupape d'admission empêche l'admission d'un fluide en provenance du compresseur vers la chambre de combustion isochore, et
   une soupape de refoulement, ladite soupape de refoulement étant mobile entre :
      une position ouverte, dans laquelle la soupape de refoulement autorise le refoulement d'un fluide en provenance de la chambre de combustion isochore, et
      une position fermée, dans laquelle la soupape de refoulement empêche le refoulement d'un fluide en provenance de la chambre de combustion isochore,
une chambre de combustion isobare configurée pour recevoir un fluide refoulé depuis la chambre de combustion isochore, et
une turbine configurée pour recevoir un fluide en provenance de la chambre de combustion isobare.

Grâce à la chambre de combustion isochore, la température du fluide reçu par la chambre de combustion isobare est augmentée. De cette manière, l'efficacité de la combustion à pression constante au sein de la chambre de combustion isobare est améliorée, ce qui réduit la consommation spécifique de carburant de la turbomachine. De plus, la chambre de combustion isochore est le siège d'une combustion à volume constant, dont le rendement thermique est supérieur au rendement thermique d'une combustion à pression constante.

Avantageusement, mais facultativement, l'ensemble selon l'invention peut comprendre l'une quelconque des caractéristiques suivantes, prise seule ou dans une quelconque combinaison :
il comprend un système de commande d'admission configuré pour commander un passage entre la position ouverte et la position fermée de la soupape d'admission, le système de commande d'admission comprenant un premier électro-aimant et un premier ressort de rappel,
le premier ressort de rappel est configuré pour solliciter la soupape d'admission vers la position ouverte,
le premier électro-aimant est configuré pour solliciter la soupape d'admission vers la position fermée lorsque le premier électro-aimant est alimenté en énergie électrique,
il comprend un système de commande de refoulement configuré pour commander un passage entre la position ouverte et la position fermée de la soupape de refoulement, le système de commande de refoulement comprenant un deuxième électro-aimant et un deuxième ressort de rappel,
le deuxième ressort de rappel est configuré pour solliciter la soupape de refoulement vers la position ouverte,
le deuxième électro-aimant est configuré pour solliciter la soupape de refoulement vers la position fermée lorsque le deuxième électro-aimant est alimenté en énergie électrique,
il comprend un injecteur configuré pour injecter du carburant à l'intérieur de la chambre de combustion isochore,
l'injecteur est disposé plus proche de la soupape d'admission que de la soupape de refoulement, et
la chambre de combustion isochore s'étend selon un axe longitudinal de la turbomachine, l'injecteur présentant un axe s'étendant selon une direction radiale à l'axe longitudinal.

Selon un second aspect de l'invention, il est proposé un procédé de fonctionnement d'un ensemble tel que précédemment décrit, comprenant les étapes de :
admission d'un fluide à l'intérieur de la chambre de combustion isochore,
injection de carburant à l'intérieur de la chambre de combustion isochore,
combustion du mélange formé par le fluide admis et le carburant injecté,
refoulement du fluide issu de la combustion du mélange hors de la chambre de combustion isochore, et
balayage de la chambre de combustion isochore.

Avantageusement, mais facultativement, le procédé selon l'invention peut comprendre l'une quelconque des caractéristiques suivantes, prise seule ou dans une quelconque combinaison :
durant les étapes d'injection et de combustion, la soupape d'admission et la soupape de refoulement sont en position fermée, et
durant l'étape de balayage, la soupape d'admission et la soupape de refoulement sont en position ouverte.

Selon un troisième aspect de l'invention, il est proposé une turbomachine comprenant un ensemble tel que précédemment décrit.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
la figure 1, déjà décrite, illustre de façon schématique une turbomachine connue de l'état de la technique,
la figure 2 illustre de façon schématique un exemple de réalisation d'un ensemble pour turbomachine selon l'invention,
la figure 3 illustre de façon schématique un exemple de réalisation d'une chambre de combustion isochore pour un mode de réalisation d'un ensemble pour turbomachine selon l'invention, et
la figure 4 illustre schématiquement différentes étapes d'un exemple de mise en œuvre d'un procédé de fonctionnement selon l'invention.

### DESCRIPTION DETAILLEE DE L'INVENTION

En référence aux figures, un ensemble pour turbomachine et un procédé de fonctionnement d'un ensemble pour turbomachine vont à présent être décrits.

### Turbomachine 1

En référence à la figure 2, une turbomachine 1 comprend un compresseur 30 s'étendant selon un axe longitudinal X-X de la turbomachine 1. La turbomachine 1 comprend en outre une turbine 50 s'étendant également selon l'axe longitudinal X-X, la turbine 50 étant entraînée en rotation autour de l'axe longitudinal X-X par le compresseur 30. En outre, une chambre de combustion isobare 40 est agencée axialement entre le compresseur 30 et la turbine 50. La chambre de combustion isobare 40 est configurée pour être le siège d'une combustion isobare, c'est-à-dire à pression constante. Enfin, une chambre de combustion isochore 7 est agencée axialement entre le compresseur 30 et la chambre de combustion isobare 40. La chambre de combustion isochore 7 est configurée pour être le siège d'une combustion isochore, c'est-à-dire à volume constant.

De manière générale, la chambre de combustion isochore 7 est configurée pour redevoir un fluide en provenance du compresseur 30, la chambre de chambre de combustion isobare 40 est configurée pour recevoir un fluide refoulé depuis la chambre de combustion isochore 7, et la turbine 50 est configurée pour recevoir un fluide en provenance de la chambre de combustion isobare 40.

Dans la présente demande, l'amont et l'aval sont définis par rapport au sens d'écoulement normal d'un fluide à travers la turbomachine 1 en fonctionnement. Par ailleurs, une direction axiale désigne une direction parallèle à l'axe longitudinal X-X, et une direction radiale est une direction perpendiculaire à cet axe longitudinal X-X, et passant par cet axe longitudinal X-X. Sauf précision contraire, interne (ou intérieur) et externe (ou extérieur), respectivement, sont utilisés en référence à une direction radiale de sorte que la partie ou la face interne (i.e. radialement interne) d'un élément est plus proche de l'axe longitudinal X-X, que la partie ou la face externe (i.e. radialement externe) du même élément.

Comme également visible sur la figure 2, la turbomachine 1 peut comprendre une soufflante 10 et une turbine de soufflante 60 s'étendant chacune selon l'axe longitudinal X-X, la soufflante 10 étant entraînée en rotation autour de l'axe longitudinal X-X par la turbine de soufflante 60. Avantageusement, la turbine de soufflante 60 est disposée en aval de la turbine 50. De manière également avantageuse, la turbomachine 1 peut en outre comprendre un compresseur supplémentaire 20, s'étendant également selon l'axe longitudinal X-X, et disposé en aval de la soufflante 10 et en amont du compresseur 30. Ce compresseur supplémentaire 20 est également entraîné en rotation autour de l'axe longitudinal X-X par la turbine de soufflante 60. Dans un mode de réalisation, le compresseur supplémentaire 20 est un compresseur basse pression, le compresseur 30 est un compresseur haute pression, la turbine 50 est une turbine haute pression, et la turbine de soufflante 60 est une turbine basse pression.

En fonctionnement, du fluide admis par la soufflante 10, typiquement de l'air, est comprimé à travers les compresseurs 20, 30, puis subit une combustion à volume constant au sein de la chambre isochore 7 avant du subir une combustion à pression constante au sein de la chambre de combustion isobare 40, pour enfin être détendu dans les turbines 50, 60. Les turbines 50, 60 entraînent en rotation à la fois la soufflante 10 et les compresseurs 20, 30.

### Chambre de combustion isochore 7

En référence aux figures 2 à 4, la chambre de combustion isochore 7 comprend :
une soupape d'admission 70, ladite soupape d'admission 70 étant mobile entre :
   une position ouverte, dans laquelle la soupape d'admission 70 autorise l'admission d'un fluide en provenance du compresseur 30 vers la chambre de combustion isochore 7, et
   une position fermée, dans laquelle la soupape d'admission 70 empêche l'admission d'un fluide en provenance du compresseur 30 vers la chambre de combustion isochore 7, et
une soupape de refoulement 72, ladite soupape de refoulement 72 étant mobile entre :
   une position ouverte, dans laquelle la soupape de refoulement 72 autorise le refoulement d'un fluide en provenance de la chambre de combustion isochore 7, et
   une position fermée, dans laquelle la soupape de refoulement 72 empêche le refoulement d'un fluide en provenance de la chambre de combustion isochore 7.

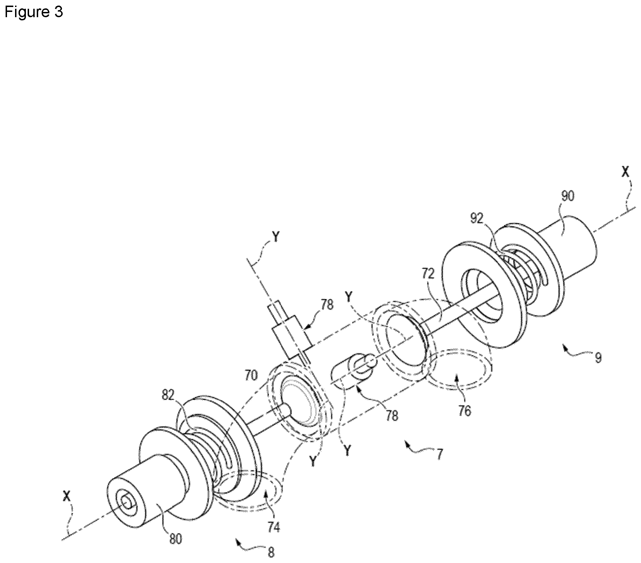

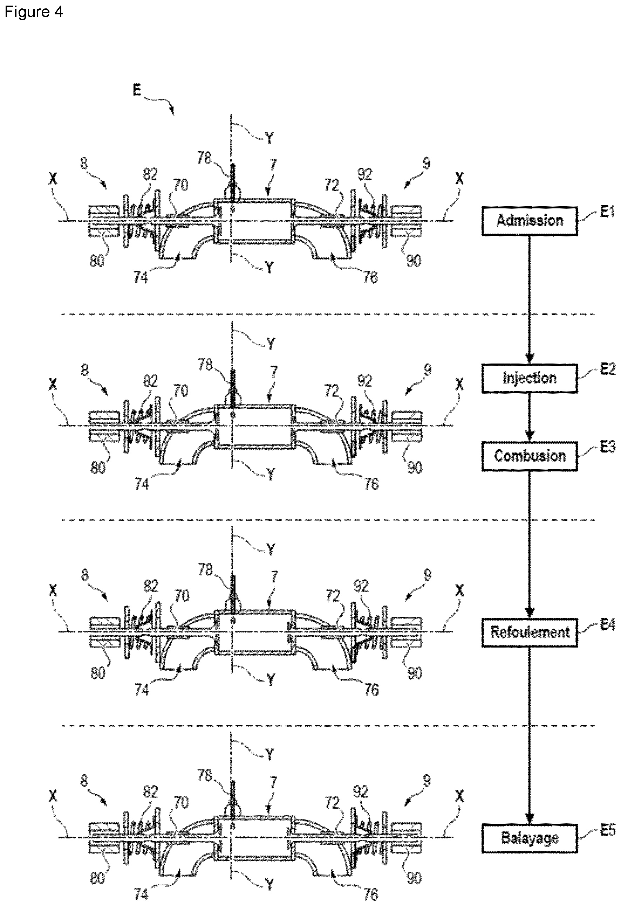

Comme visible plus précisément sur les figures 3 et 4, la chambre de combustion isochore 7 comprend avantageusement :
un conduit d'admission 74, configuré pour guider un fluide destiné à être admis au sein de la chambre de combustion isochore 7, par exemple en provenance du compresseur, et
un conduit de refoulement 76, configuré pour guider un fluide refoulé depuis la chambre de combustion isochore 7, par exemple vers la chambre de combustion isobare 40.

En référence aux figures 3 et 4, dans un mode de réalisation, la turbomachine 1 comprend un système de commande d'admission 8 configuré pour commander un passage entre la position ouverte et la position fermée de la soupape d'admission 70.

Dans une variante avantageuse, le système de commande d'admission 8 comprend un premier électro-aimant 80, et un premier ressort de rappel 82. De manière privilégiée, le premier ressort de rappel 82 est configuré pour solliciter la soupape d'admission 70 vers la position ouverte. En outre, le premier électro-aimant 80 est configuré pour solliciter la soupape d'admission 70 vers la position fermée lorsque le premier électro-aimant 80 est alimenté en énergie électrique. De cette manière, en cas de panne du premier électro-aimant 80, la soupape d'admission 70 demeure en position ouverte.

Toujours en référence aux figures 3 et 4, dans un mode de réalisation, la turbomachine 1 comprend un système de commande de refoulement 9 configuré pour commander un passage entre la position ouverte et la position fermée de la soupape de refoulement 72.

Dans une variante avantageuse, le système de commande de refoulement 9 comprend un deuxième électro-aimant 90, et un deuxième ressort de rappel 92. De manière privilégiée, le deuxième ressort de rappel 92 est configuré pour solliciter la soupape de refoulement 72 vers la position ouverte. En outre, le deuxième électro-aimant 90 est configuré pour solliciter la soupape de refoulement 72 vers la position fermée lorsque le deuxième électro-aimant 90 est alimenté en énergie électrique. De cette manière, en cas de panne du deuxième électro-aimant 90, la soupape de refoulement 72 demeure en position ouverte.

Dans un mode de réalisation, également illustré sur les figures 3 et 4, la turbomachine 1 comprend un injecteur 78 configuré pour injecter du carburant à l'intérieur de la chambre de combustion isochore 7. Le carburant injecté est mélangé au fluide admis au sein de la chambre de combustion isochore 7 en vue de la combustion à volume constant, typiquement par auto-inflammation du mélange fluide-carburant. Comme visible sur les figures 3 et 4, dans une variante avantageuse, l'injecteur 78 est disposé plus proche de la soupape d'admission 70 que de la soupape de refoulement 72. En d'autres termes, la distance séparant la soupape d'admission 70 de l'injecteur 78 est inférieure à la distance séparant l'injecteur 78 de la soupape de refoulement 72. De cette manière, le mélange de carburant avec du fluide admis au sein de la chambre isochore 7 est favorisé, ce qui permet d'optimiser la combustion à volume constant.

Comme visible sur les figures 2 à 4, dans un mode de réalisation, la chambre de combustion isochore 7 s'étend selon l'axe longitudinal X-X. Avantageusement, l'injecteur 78 présente alors un axe Y-Y s'étendant selon une direction radiale à l'ace longitudinal X-X. Ceci permet d'optimiser la disposition de la chambre de combustion isochore 7 au sein de la turbomachine 1.

Dans un mode de réalisation visible sur la figure 2, la turbomachine 1 comprend une pluralité de chambres de combustion isochore 7 réparties circonférentiellement autour de l'axe longitudinal X-X. De cette manière, il est possible de contrôler l'augmentation de température du fluide reçu par la chambre de combustion isobare 40, mais également d'optimiser la gestion du débit de fluide en provenance du compresseur 30, qui est ensuite reçu par la chambre de combustion isobare 40. Ainsi, il est possible de s'affranchir de la présence d'une chambre de tranquillisation en amont de la chambre de combustion isobare 40.

### Procédé de fonctionnement E

En référence à la figure 4, un procédé de fonctionnement E d'un ensemble pour turbomachine 1 selon l'un quelconque des modes de réalisation précédemment décrits, comprend les étapes de :
admission E1 d'un fluide à l'intérieur de la chambre de combustion isochore 7,
injection E2 de carburant à l'intérieur de la chambre de combustion isochore 7,
combustion E3 du mélange formé par le fluide admis et le carburant injecté,
refoulement E4 du fluide issu de la combustion du mélange hors de la chambre de combustion isochore 7, et
balayage E5 de la chambre de combustion isochore 7.

Comme visible sur la figure 4, dans un mode de mise en œuvre, durant les étapes d'injection E2 et de combustion E3, la soupape d'admission 70 et la soupape de refoulement 72 sont en position fermée.

Toujours en référence à la figure 4, dans un mode de mise en œuvre, durant l'étape de balayage E5, la soupape d'admission 70 et la soupape de refoulement 72 sont en position ouverte.

Ainsi, la combustion E3 se produit à volume constant, ce qui entraîne une hausse de pression et de température du mélange. Lors du refoulement E4, le mélange est à haute température et haute pression au moment d'être reçu par la chambre de combustion isobare 40. La pression et la température diminue alors progressivement au sein de la chambre de combustion isochore 7. Puis, une fois que la pression à l'intérieur de la chambre de combustion isochore 7 est descendue en-dessous du niveau de la pression de fluide en aval du compresseur 30, le passage de la soupape d'admission 70 en position ouverte permet de remplacer le mélange brûlé par du fluide frais au sein de la chambre de combustion isochore 7.

Dans un mode de mise en œuvre où la turbomachine 1 comprend une pluralité de chambres de combustion isochore 7, chaque chambre de combustion isochore 7 peut fonctionner de manière déphasée par rapport aux autres chambres de combustion isochore 7. Plus précisément, chaque chambre de combustion isochore 7 met en œuvre une étape E1, E2, E3, E4, E5 de fonctionnement qui est différente des étapes E1, E2, E3, E4, E5 de fonctionnement mises en œuvre par les autres chambres de combustion isochore 7.

Dans un mode de mise en œuvre, il est nécessaire de s'assurer que le mélange refoulé de la chambre de combustion isochore 7 comprenne un excès de fluide par rapport aux gaz brûlés afin de s'assurer qu'une combustion peut être réalisée dans la chambre de combustion isobare 40.

Pour ce faire, dans une première variante de mise en œuvre, la quantité de carburant injecté lors de l'injection E2 est inférieure à la quantité stœchiométrique de carburant nécessaire à la combustion de la totalité du fluide admis au sein de la chambre de combustion isochore 7. Dans cette première variante de mise en œuvre, la quantité de carburant injectée est néanmoins suffisante pour que, dans les conditions de température et de pression au sein de la chambre de combustion isochore 7, le mélange puisse s'auto-enflammée, sans qu'il ne soit nécessaire d'employer une bougie. Dans ce cas, il est également possible de limiter le temps de réalisation de l'étape de balayage E5 afin de s'assurer qu'une partie des gaz brûlés du mélange reste emprisonnés dans la chambre de combustion isochore 7 afin de faciliter l'auto-inflammation le cas échéant.

Dans une seconde variante de mise en œuvre pour assurer l'excès de fluide, l'étape de balayage E5 est prolongée suffisamment pour qu'un excès de fluide puisse parvenir au sein de la chambre de combustion isobare 40.

Dans un mode de mise en œuvre, le conduit d'admission 74 et le conduit de refoulement 76 jouent, avec la chambre de combustion isobare 40, le rôle de volume tampon pour le fonctionnement de la chambre de combustion isochore 7.

En tout état de cause, aucune puissance mécanique n'est récupérée par la turbomachine 1 suite à la combustion à volume constant au sein de la chambre de combustion isochore 7.

## Revendications

1. Ensemble pour turbomachine (1) comprenant :
un compresseur (30),
une chambre de combustion isochore (7), ladite chambre de combustion isochore (7) comprenant:
une soupape d'admission (70), ladite soupape d'admission (70) étant mobile entre :
une position ouverte, dans laquelle la soupape d'admission (70) autorise l'admission d'un fluide en provenance du compresseur (30) vers la chambre de combustion isochore (7), et
une position fermée, dans laquelle la soupape d'admission (70) empêche l'admission d'un fluide en provenance du compresseur (30) vers la chambre de combustion isochore (7), et
une soupape de refoulement (72), ladite soupape de refoulement (72) étant mobile entre :
une position ouverte, dans laquelle la soupape de refoulement (72) autorise le refoulement d'un fluide en provenance de la chambre de combustion isochore (7), et
une position fermée, dans laquelle la soupape de refoulement (72) empêche le refoulement d'un fluide en provenance de la chambre de combustion isochore (7),
une chambre de combustion isobare (40) configurée pour recevoir un fluide refoulé depuis la chambre de combustion isochore (7), et
une turbine (50) configurée pour recevoir un fluide en provenance de la chambre de combustion isobare (40).

2. Ensemble selon la revendication 1, comprenant un système de commande d'admission (8) configuré pour commander un passage entre la position ouverte et la position fermée de la soupape d'admission (70), le système de commande d'admission (8) comprenant un premier électro-aimant (80) et un premier ressort de rappel (82).

3. Ensemble selon la revendication 2, dans lequel le premier ressort de rappel (82) est configuré pour solliciter la soupape d'admission (70) vers la position ouverte.

4. Ensemble selon l'une des revendications 2 et 3, dans lequel le premier électro-aimant (80) est configuré pour solliciter la soupape d'admission vers la position fermée lorsque le premier électro-aimant (80) est alimenté en énergie électrique.

5. Ensemble selon l'une des revendications 1 à 4, comprenant un système de commande de refoulement (9) configuré pour commander un passage entre la position ouverte et la position fermée de la soupape de refoulement (72), le système de commande de refoulement comprenant (9) un deuxième électro-aimant (90) et un deuxième ressort de rappel (92).

6. Ensemble selon la revendication 5, dans lequel le deuxième ressort de rappel (92) est configuré pour solliciter la soupape de refoulement (72) vers la position ouverte.

7. Ensemble selon l'une des revendications 5 et 6, dans lequel le deuxième électro-aimant (90) est configuré pour solliciter la soupape de refoulement (72) vers la position fermée lorsque le deuxième électro-aimant (90) est alimenté en énergie électrique.

8. Ensemble selon l'une des revendications 1 à 7, comprenant un injecteur (78) configuré pour injecter du carburant à l'intérieur de la chambre de combustion isochore (7).

9. Ensemble selon la revendication 8, dans lequel l'injecteur (78) est disposé plus proche de la soupape d'admission (70) que de la soupape de refoulement (72).

10. Ensemble selon l'une des revendications 8 et 9, dans lequel la chambre de combustion isochore (7) s'étend selon un axe longitudinal (X-X) de la turbomachine (1), l'injecteur (78) présentant un axe (Y-Y) s'étendant selon une direction radiale à l'axe longitudinal (X-X).

11. Procédé de fonctionnement (E) d'un ensemble selon l'une des revendications 1 à 10, comprenant les étapes de :
admission (E1) d'un fluide à l'intérieur de la chambre de combustion isochore (7),
injection (E2) de carburant à l'intérieur de la chambre de combustion isochore (7),
combustion (E3) du mélange formé par le fluide admis et le carburant injecté,
refoulement (E4) du fluide issu de la combustion du mélange hors de la chambre de combustion isochore (7), et
balayage (E5) de la chambre de combustion isochore (7).

12. Procédé de fonctionnement (E) selon la revendication 11, dans lequel, durant les étapes d'injection (E2) et de combustion (E3), la soupape d'admission (70) et la soupape de refoulement (72) sont en position fermée.

13. Procédé de fonctionnement (E) selon l'une des revendications 11 et 12, dans lequel, durant l'étape de balayage (E5), la soupape d'admission (70) et la soupape de refoulement (72) sont en position ouverte.

14. Turbomachine comprenant un ensemble selon l'une des revendications 1 à 10.

## Patentansprüche

1. Anordnung für Turbotriebwerk (1), umfassend:
einen Kompressor (30),
eine isochore Verbrennungskammer (7), wobei die isochore Verbrennungskammer (7) umfasst:
ein Einlassventil (70), wobei das Einlassventil (70) beweglich ist zwischen:
einer geöffneten Position, in welcher das Einlassventil (70) den Einlass eines vom Kompressor (30) kommenden Fluids in die isochore Verbrennungskammer (7) gestattet, und
einer geschlossenen Position, in welcher das Einlassventil (70) den Einlass eines vom Kompressor (30) kommenden Fluids in die isochore Verbrennungskammer (7) verhindert, und
ein Auslassventil (72), wobei das Auslassventil (72) beweglich ist zwischen:
einer geöffneten Position, in welcher das Auslassventil (72) den Auslass eines von der isochoren Verbrennungskammer (7) kommenden Fluids gestattet, und
einer geschlossenen Position, in welcher das Auslassventil (72) den Auslass eines von der isochoren Verbrennungskammer (7) kommenden Fluids verhindert,
eine isobare Verbrennungskammer (40), die ausgelegt ist, um ein aus der isochoren Verbrennungskammer (7) ausgelassenes Fluid zu empfangen, und
eine Turbine (50), die ausgelegt ist, um ein von der isobaren Verbrennungskammer (40) kommendes Fluid zu empfangen.

2. Anordnung nach Anspruch 1, umfassend ein Einlass-Steuerungssystem (8), das ausgelegt ist, um einen Wechsel zwischen der geöffneten Position und der geschlossenen Position des Einlassventils (70) zu steuern, wobei das Einlass-Steuerungssystem (8) einen ersten Elektromagneten (80) und eine erste Rückstellfeder (82) umfasst.

3. Anordnung nach Anspruch 2, wobei die erste Rückstellfeder (82) ausgelegt ist, um das Einlassventil (70) in die geöffnete Position zu beanspruchen.

4. Anordnung nach einem der Ansprüche 2 und 3, wobei der erste Elektromagnet (80) ausgelegt ist, um das Einlassventil in die geschlossene Position zu beanspruchen, wenn der erste Elektromagnet (80) mit elektrischer Energie versorgt wird.

5. Anordnung nach einem der Ansprüche 1 bis 4, umfassend ein Auslass-Steuerungssystem (9), das ausgelegt ist, um einen Wechsel zwischen der geöffneten Position und der geschlossenen Position des Auslassventils (72) zu steuern, wobei das Auslass-Steuerungssystem (9) einen zweiten Elektromagneten (90) und eine zweite Rückstellfeder (92) umfasst.

6. Anordnung nach Anspruch 5, wobei die zweite Rückstellfeder (92) ausgelegt ist, um das Auslassventil (72) in die geöffnete Position zu beanspruchen.

7. Anordnung nach einem der Ansprüche 5 und 6, wobei der zweite Elektromagnet (90) ausgelegt ist, um das Auslassventil (72) in die geschlossene Position zu beanspruchen, wenn der zweite Elektromagnet (90) mit elektrischer Energie versorgt wird.

8. Anordnung nach einem der Ansprüche 1 bis 7, umfassend einen Injektor (78), der ausgelegt ist, um einen Kraftstoff in die isochore Verbrennungskammer (7) einzuspritzen.

9. Anordnung nach Anspruch 8, wobei der Injektor (78) näher am Einlassventil (70) als am Auslassventil (72) angeordnet ist.

10. Anordnung nach einem der Ansprüche 8 und 9, wobei sich die isochore Verbrennungskammer (7) gemäß einer Längsachse (X-X) des Turbotriebwerks (1) erstreckt, wobei der Injektor (78) eine Achse (Y-Y) aufweist, die sich gemäß einer Richtung radial zur Längsachse (X-X) erstreckt.

11. Verfahren zum Betreiben (E) einer Anordnung nach einem der Ansprüche 1 bis 10, umfassend die folgenden Schritte:
Einlassen (E1) eines Fluids in die isochore Verbrennungskammer (7),
Einspritzen (E2) von Kraftstoff in die isochore Verbrennungskammer (7),
Verbrennen (E3) des aus dem eingelassenen Fluid und dem eingespritzten Kraftstoff gebildeten Gemischs,
Auslassen (E4) des aus der Verbrennung des Gemischs resultierenden Fluids aus der isochoren Verbrennungskammer (7), et
Spülen (E5) der isochoren Verbrennungskammer (7).

12. Betriebsverfahren (E) nach Anspruch 11, wobei während der Schritte des Einspritzens (E2) und des Verbrennens (E3) das Einlassventil (70) und das Auslassventil (72) in geschlossener Position sind.

13. Betriebsverfahren (E) nach einem der Ansprüche 11 und 12 wobei während des Schritts des Spülens (E5) das Einlassventil (70) und das Auslassventil (72) in geöffneter Position sind.

14. Turbotriebwerk, umfassend eine Anordnung nach einem der Ansprüche 1 bis 10.

## Claims

1. An assembly for a turbomachine(1) comprising:
a compressor (30),
an isochoric combustion chamber (7), said isochoric combustion chamber (7) comprising:
an intake valve (70), said intake valve (70) being movable between:
an open position, in which the intake valve (70) authorizes the intake of a fluid coming from the compressor (30) towards the isochoric combustion chamber (7), and
a closed position, in which the intake valve (70) prevents the intake of a fluid coming from the compressor (30) towards the isochoric combustion chamber (7), and
a discharge valve (72), said discharge valve (72) being movable between:
an open position, in which the discharge valve (72) authorizes the discharge of a fluid coming from the isochoric combustion chamber (7), and
a closed position, in which the discharge valve (72) prevents the discharge of a fluid coming from the isochoric combustion chamber (7),
an isobaric combustion chamber (40) configured to receive a fluid discharged from the isochoric combustion chamber (7), and
a turbine (50) configured to receive a fluid coming from the isobaric combustion chamber (40).

2. The assembly according to claim 1, comprising an intake control system (8) configured to control a passage between the open position and the closed position of the intake valve (70), the intake control system (8) comprising a first electromagnet (80) and a first return spring (82).

3. The assembly according to claim 2, wherein the first return spring (82) is configured to bias the intake valve (70) towards the open position.

4. The assembly according to any of claims 2 and 3, wherein the first electromagnet (80) is configured to bias the intake valve towards the closed position when the first electromagnet (80) is supplied with electrical energy.

5. The assembly according to any of claims 1 to 4, comprising a discharge control system (9) configured to control a passage between the open position and the closed position of the discharge valve (72), the discharge control system (9) comprising a second electromagnet (90) and a second return spring (92).

6. The assembly according to claim 5, wherein the second return spring (92) is configured to bias the discharge valve (72) towards the open position.

7. The assembly according to any of claims 5 and 6, wherein the second electromagnet (90) is configured to bias the discharge valve (72) towards the closed position when the second electromagnet (90) is supplied with electrical energy.

8. The assembly according to any of claims 1 to 7, comprising an injector (78) configured to inject fuel inside the isochoric combustion chamber (7).

9. The assembly according to claim 8, wherein the injector (78) is disposed closer to the intake valve (70) than to the discharge valve (72).

10. The assembly according to any of claims 8 and 9, wherein the isochoric combustion chamber (7) extends along a longitudinal axis (X-X) of the turbomachine (1), the injector (78) having an axis (Y-Y) extending along a direction radial to the longitudinal axis (X-X).

11. A method for operating (E) an assembly according to any of claims 1 to 10, comprising the following steps:
intake (E1) of a fluid inside the isochoric combustion chamber (7),
injection (E2) of fuel inside the isochoric combustion chamber (7),
combustion (E3) of the mixture formed by the taken fluid and the injected fuel,
discharge (E4) of the fluid derived from the combustion of the mixture out of the isochoric combustion chamber (7), and
scavenging (E5) of the isochoric combustion chamber (7) .

12. The operating method (E) according to claim 11, wherein, during the injection (E2) and combustion (E3) steps, the intake valve (70) and the discharge valve (72) are in the closed position.

13. The operating method (E) according to any of claims 11 and 12, wherein, during the scavenging step (E5), the intake valve (70) and the discharge valve (72) are in the open position.

14. A turbomachine comprising an assembly according to any of claims 1 to 10.
